Europäisches Patentamt

European Patent Office

Office européen des brevets

(19)

(11) Numéro de publication: **0 346 219**
**A1**

## (12) DEMANDE DE BREVET EUROPEEN

(21) Numéro de dépôt: **89401566.8**

(22) Date de dépôt: **06.06.89**

(51) Int. Cl.⁴: **H 02 H 3/33**

(30) Priorité: **07.06.88 FR 8807571**

(43) Date de publication de la demande:
**13.12.89 Bulletin 89/50**

(84) Etats contractants désignés:
**AT BE CH DE ES GB IT LI LU NL**

(71) Demandeur: **COMPAGNIE GENERALE
D'APPAREILLAGE ELECTRIQUE "C.G.A.E."
S.A.T.E.L.E.M.
32-34 rue Bréguet
F-75011 Paris (FR)**

(72) Inventeur: **Pernot, Christian, André
107 rue de Reuilly
F-75012 Paris (FR)**

(74) Mandataire: **Berger, Helmut et al
Cabinet Z. WEINSTEIN 20, avenue de Friedland
F-75008 Paris (FR)**

(54) Dispositif interrupteur à déclenchement monté dans une installation électrique.

(57) L'invention concerne un dispositif interrupteur à déclenchement monté dans une installation électrique.

Le dispositif comprend des moyens détecteurs (E1, E2, E3, A) d'un courant différentiel résiduel tel qu'un courant de fuite dans la partie de l'installation formant charge et un organe interrupteur (F) du courant d'alimentation de la charge, commandé en ouverture par les moyens détecteurs lors de la détection d'un courant différentiel résiduel et est caractérisé en ce que l'organe interrupteur (F) est du type revenant automatiquement à son état de fermeture du circuit d'alimentation après une coupure de la tension d'alimentation en amont de l'organe interrupteur lors d'une nouvelle mise sous tension de l'installation.

L'invention est utilisable notamment dans des installations fonctionnant par intermittence.

## Description

### Dispositif interrupteur à déclenchement monté dans une installation électrique

La présente invention concerne un dispositif interrupteur à déclenchement monté dans une installation électrique, notamment une installation fonctionnant par intermittence, dans le circuit d'alimentation en énergie électrique d'une charge, du type comprenant des moyens détecteurs d'un courant différentiel résiduel tel qu'un courant de fuite dans la partie de l'installation formant ladite charge et un organe interrupteur du courant d'alimentation de la charge, commandé en ouverture par les moyens détecteurs lors de la détection d'un courant différentiel résiduel.

Les dispositifs connus de ce type comportent généralement un système électromécanique ou électronique de détection provoquant l'ouverture de l'interrupteur lorsque le courant différentiel résiduel de défaut dépasse une valeur prédéterminée. La remise sous tension du circuit de la charge protégée nécessite alors une intervention pour remettre en fonctionnement ledit interrupteur.

Dans le cas d'installations de ce type connu, qui comportent un grand nombre d'interrupteurs, ces interventions peuvent s'avérer fastidieuses, onéreuses et souvent inutiles dans la mesure où des courants différentiels résiduels ou courants de fuite peuvent naître occasionnellement puis disparaître ensuite.

La présente invention a pour objectif de proposer un dispositif interrupteur du type décrit plus haut qui ne présente plus les inconvénients qui viennent d'être énoncés.

Pour atteindre ce but, le dispositif interrupteur à déclenchement selon l'invention est caractérisé en ce que l'organe interrupteur est du type revenant automatiquement à son état de fermeture du circuit d'alimentation après une coupure de la tension d'alimentation en amont de l'organe interrupteur.

Selon une caractéristique avantageuse de l'invention, le dispositif interrupteur comprend un circuit à retard de sa mise à l'état de fonctionnement à chaque mise sous tension de l'installation.

Selon une autre caractéristique avantageuse de l'invention, l'organe interrupteur est formé par un organe tel qu'un TRIAC ou le contact d'un relais, dont le circuit d'activation est relié à un circuit de commande en ouverture pourvu de moyens de verrouillage de ce circuit à l'état de commande en ouverture pour toute la durée de la présence de la tension d'alimentation en amont de l'organe interrupteur.

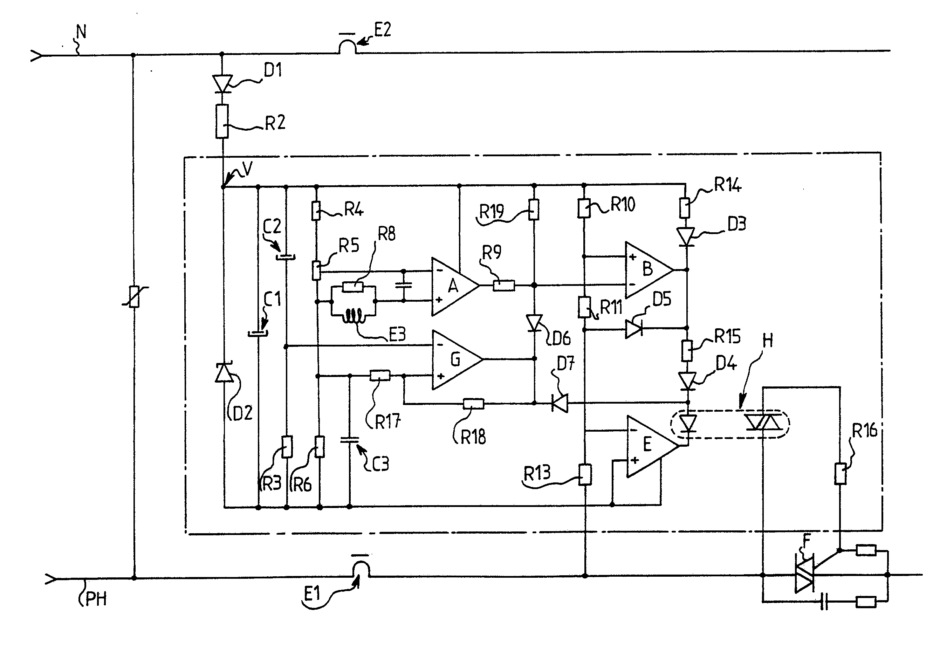

L'invention sera mieux comprise et d'autres buts, caractéristiques détails et avantages de celle-ci apparaîtront plus clairement au cours de la description explicative qui va suivre faite en référence à la figure unique donnée uniquement à titre d'exemple d'un mode de réalisation de l'invention.

Comme il ressort clairement de cette figure, le dispositif interrupteur selon l'invention est inséré dans une installation électrique dont une ligne de phase et la ligne neutre sont désignées par les symboles de référence PH et N, entre une partie formant secteur d'alimentation en énergie électrique et une partie formant la charge électrique.

Le dispositif selon l'invention comprend un circuit destiné à produire la tension continue d'alimentation pour les différents circuits du dispositif, à partir de la tension d'alimentation de l'installation. Ce circuit comprend un montage en série d'une diode D1 reliée par son anode à la ligne neutre N, d'une résistance R2 et d'un montage en parallèle formé par une diode zener D2 et par un condensateur C1 destinés à produire à la borne commune des résistances R2 et du condensateur C1 une tension constante V. En parallèle au condensateur C1 soit montés en série un condensateur C2 et une résistance R3 ainsi qu'un circuit de trois résistances R4, R5 et R6, montées en série.

Le circuit détecteur d'un défaut dans la partie formant charge de l'installation, sous forme d'un courant différentiel résiduel tel qu'un courant de fuite dans la partie de charge, comprend essentiellement un transformateur différentiel, qui comporte deux enroulements primaires E1, E2 respectivement montés dans les lignes de phase et neutre PH et N et un enroulement secondaire E3 relié par une borne à la borne commune des résistances R5 et R6 et par son autre borne à l'entrée positive d'un amplificateur différentiel A. Une résistance R8 est montée en parallèle à l'enroulement secondaire E3. La résistance R5 est réalisée sous forme d'un potentiomètre dont le curseur est connecté à l'entrée négative de l'amplificateur A. La sortie de ce dernier est reliée par une résistance R9 à l'entrée négative d'un amplificateur opérationnel B formant amplificateur différentiel dont l'entrée positive est reliée à la borne commune de deux résistances R10 et R11 montées en série avec une résistance R13 entre la ligne de phase PH et la borne de la tension continue V. La sortie de l'amplificateur B est reliée, d'une part, par l'intermédiaire d'un montage en série d'une résistance R14 et d'une diode D3 du type LED rouge dont la cathode est connectée à la sortie de l'amplificateur, au potentiel de la tension d'alimentation continue V et, d'autre part, par une résistance R15 et une diode D4 du type LED verte dont l'anode est orientée vers la sortie de l'amplificateur B, à l'anode de la diode d'un opto-coupleur H, relié par sa cathode, à la sortie d'un amplificateur différentiel E. Ces entrées négatives et positives sont reliées respectivement à la borne commune des deux résistances R11 et R13 et à la ligne de phase PH. La borne commune des résistances R11 et R13 est en outre reliée par une diode D5 à la sortie de l'amplificateur B. C'est la cathode qui est connectée à cette sortie.

Comme il ressort de la figure, l'organe interrupteur F constitué dans l'exemple représenté par un TRIAC est monté dans le circuit du photo-récepteur de l'opto-coupleur H, en série avec une résistance R16.

Le dispositif interrupteur selon l'invention comprend en outre un circuit à retard comprenant essentiellement un amplificateur différentiel G dont les entrées négative et positive sont reliées respectivement à la borne commune du condensateur C2 et de la résistance R3 et, par l'intermédiaire d'une résistance R17 à la borne commune des résistances R5 et R6. Un condensateur C3 est monté en parallèle à la résistance R6. La sortie de l'amplificateur G est connectée, d'une part, à l'entrée négative de l'amplificateur différentiel B par l'intermédiaire d'une diode D6 et, d'autre part, à la cathode de la diode D4, par l'intermédiaire d'une diode D7. Les cathodes des diodes D6 et D7 sont connectées à la sortie de l'amplificateur G. Ce dernier est également connecté à son entrée positive par une résistance R18. Enfin une résistance R19 relie la borne négative de l'amplificateur B à la borne de potentiel V.

Il est à noter que seulement les composants électriques qui interviennent dans le fonctionnement du dispositif selon l'invention ont été mentionnés.

On décrira ci-après le fonctionnement du dispositif interrupteur selon l'invention, qui vient d'être décrit en se référant à la figure unique.

A la mise sous tension secteur du dispositif interrupteur, formant interrupteur différentiel statique, une tension continue positive V apparaît à la borne commune de la diode zener D2 et du condensateur C1. La tension s'établit suivant une constante de temps définie par les résistances R2 et le condensateur C1 et se stabilise par exemple à 10 volts.

La mise en conduction du TRIAC F est retardée par rapport à l'apparition de la tension secteur de manière à laisser le temps aux différents circuits électroniques d'être convenablement alimentés avant d'appliquer la tension secteur au circuit d'utilisation, c'est-à-dire la partie formant la charge de l'installation. Sans cette disposition, il aurait pu arriver qu'il y ait un défaut d'isolement détecté par le transformateur différentiel E, alors que les différents circuits électroniques ne sont pas encore en mesure de le détecter du fait d'une tension d'alimentation V insuffisante.

Le retard à la mise en conduction du TRIAC F est obtenu de la manière suivante : la tension aux bornes de la résistance R3 est supérieure à la tension aux bornes de la résistance R6 pendant un temps défini par la constante de temps déterminée par la résistance R3 et le condensateur C2, quelle que soit la valeur du potentiel V. L'amplificateur G se trouve ainsi bloqué car la tension sur son entrée négative est supérieure à la tension sur son entrée positive. La tension à la sortie de l'amplificateur G est nulle. La tension à la sortie de l'amplificateur E est également nulle, car la tension sur son entrée négative est toujours supérieure à la tension sur son entrée positive. L'intérêt de cet amplificateur apparaîtra plus loin.

Dans ces conditions, la tension à l'anode de la diode de l'opto-coupleur H est au plus égale à 0,6 volt car tout se passe comme si la diode D7 court-circuitait celle-ci. Ainsi la gâchette du TRIAC F n'est pas alimentée et celui-ci est bloqué.

Après un temps prédéterminé, le condensateur C2 est suffisamment chargé, l'amplificateur G se sature et sa sortie passe au potentiel élevé, dans l'exemple au potentiel V. La diode D7 est alors bloquée et il y a la possibilité d'avoir aux bornes de la diode de l'opto-coupleur D une tension suffisante pour l'activer. La résistance de contre-réaction R18 donne à l'amplificateur G la configuration d'une bascule de Schmitt. On obtient un basculement de l'amplificateur sans oscillation.

Si dans ces conditions, le transformateur différentiel E ne détecte pas un courant de fuite par exemple dû à un défaut d'isolement, d'une valeur supérieure à la valeur prédéterminée de par exemple 0,1A, le TRIAC F devient conducteur et ferme le circuit d'alimentation en énergie électrique de la charge de l'installation.

En effet, dans ces conditions l'amplificateur A reste bloqué car la tension à son entrée négative est supérieure à la tension à son entrée positive de sorte que la tension à sa sortie est nulle. En revanche l'amplificateur B est saturé car la tension sur son entrée positive fixée par le circuit diviseur de tension R10, R11, R13 est égale à

$$\frac{R13 + R11}{R13 + R11 + R10} \times V$$

et supérieure à la tension à son entrée négative qui est égale à

$$\frac{R9}{R9 + R19} \times V.$$

La sortie de l'amplificateur B est par conséquent à son état haut, c'est-à-dire au potentiel V. La cathode de la diode LED D3 étant au potentiel V, celle-ci est éteinte. La diode LED verte D4 en série avec la diode de l'opto-coupleur H est par contre allumée car sa cathode est au potentiel zéro. Par conséquent, l'opto-coupleur H est activé et le TRIAC F est conducteur.

Si le transformateur différentiel E détecte un courant de fuite d'une valeur supérieure à la valeur prédéterminée, l'amplificateur A se sature et la tension à sa sortie passe au potentiel V, ce qui provoque le blocage de l'amplificateur B dont la tension de sortie devient nulle. Ceci permet la conduction de la diode LED rouge D3. Celle-ci s'allume. Par contre la diode LED verte D4 en série avec la diode de l'opto-coupleur H s'éteint. L'opto-TRIAC H est désactivé et le TRIAC F se bloque.

Si le défaut détecté est passager le TRIAC F reste quand même bloqué. On peut dire que le défaut est pris en mémoire par la diode D5. En effet, dès qu'un défaut a été détecté, la tension à la sortie de l'amplificateur B passe à 0 et la diode D5 devient conductrice. A cet état, elle modifie le pont diviseur qui alimente l'entrée positive de l'amplificateur B. Ce pont qui était constitué par

$$\frac{R13 + R11}{R13 + R11 + R10}$$

est désormais constitué par

<u>R11</u> .

R11 + R10

Ainsi l'amplificateur B ne pourra plus être saturé car la tension à son entrée négative (si le défaut a disparu) sera toujours supérieure à la tension à l'entrée positive. Pour pouvoir à nouveau rendre conducteur le TRIAC F, il faudra préalablement couper l'alimentation de la partie secteur de l'installation.

Concernant le rôle de l'amplificateur E, il permet d'élever le potentiel de la cathode de la diode de l'opto-coupleur D à environ 0,6 volt, ce qui rend plus sûr le rôle de court-circuitage tenu par la diode D7 pendant la phase de mise sous tension. Il est à noter ici, que différemment de ce qui a été admis précédemment pour faciliter la description de l'invention, la tension de sortie d'un amplificateur bloqué n'est pas exactement 0. En fait elle atteint quelques centaines de millivolts constituant la tension résiduelle.

Pour compléter la description de l'invention, il convient de décrire encore la fonction de la diode D6. Cette dernière intervient pendant la phase de mise sous tension. Pendant cette phase la tension à la sortie de l'amplificateur G est 0. Si pour une raison quelconque une impulsion parasite apparaîssait à l'entrée négative de l'amplificateur B, la diode D6 éviterait le blocage de cet amplificateur. Après la phase de mise sous tension, le potentiel à la sortie de l'amplificateur G passe au potentiel V et la diode D6 est bloquée et n'intervient plus.

Il ressort de la description du dispositif interrupteur selon l'invention, qui vient d'être faite, que celui-ci permet un isolement du circuit formant la charge à protéger de l'installation électrique, dès la détection par exemple d'un courant de fuite dû à un défaut d'isolement. L'organe interrupteur reste verrouillé à son état d'isolement de la charge par l'ouverture du circuit d'alimentation de celle-ci, pour toute la durée de présence de la tension secteur en amont du dispositif, même si le défaut de fuite venait à disparaître. Cet effet est assuré par la diode D5. Bien entendu cet effet disparaît lors de la coupure de la tension secteur. Ainsi à une nouvelle mise sous tension de l'installation, le dispositif selon l'invention est à nouveau en mesure de tester le circuit placé en aval qu'il alimente et protège, après que l'organe interrupteur ait pu revenir automatiquement à son état permettant la fermeture du circuit d'alimentation de la charge. Selon une autre des caractéristiques avantageuses, le dispositif interrupteur ne peut pas se fermer si la source d'alimentation a été raccordée par erreur sur les bornes d'utilisation du dispositif.

Bien entendu de nombreuses modifications peuvent être apportées au dispositif interrupteur selon l'invention, qui est représenté, sans sortir du cadre de l'invention. Par exemple, le TRIAC F formant organe interrupteur pourrait être formé par tout autre organe ou dispositif approprié, tel que par exemple un relais.

**Revendications**

1. Dispositif interrupteur à déclenchement monté dans une installation électrique, notamment une installation fonctionnant par intermittence, dans le circuit d'alimentation en énergie électrique, d'une charge, du type comprenant des moyens détecteurs d'un courant différentiel résiduel tel qu'un courant de fuite dans la partie de l'installation formant ladite charge et un organe interrupteur du courant d'alimentation de la charge, commandé en ouverture par les moyens détecteurs lors de la détection d'un courant différentiel résiduel, caractérisé en ce que l'organe interrupteur (F) est du type revenant automatiquement à son état de fermeture du circuit d'alimentation après une coupure de la tension d'alimentation en amont de l'organe interrupteur lors d'une nouvelle mise sous tension de l'installation.

2. Dispositif interrupteur selon la revendication 1, caractérisé en ce qu'il comprend un circuit à retard (C2, R3, G, D7), de sa mise à l'état de fonctionnement à chaque mise sous tension de l'installation.

3. Dispositif interrupteur selon l'une des revendications 1 ou 2, caractérisé en ce que l'organe interrupteur (F) est formé par un organe tel qu'un TRIAC ou le contact d'un relais, dont le circuit d'activation est relié à un circuit de commande en ouverture pourvu de moyens de verrouillage de ce circuit à l'état de commande en ouverture pour toute la durée de la présence de la tension d'alimentation en amont de l'organe interrupteur (F).

4. Dispositif interrupteur selon l'une des revendications précédentes, caractérisé en ce qu'il comprend un circuit (D1, R2, D2, C1) générateur de sa tension d'alimentation continue à partir de la tension d'alimentation de l'installation.

5. Dispositif interrupteur selon l'une des revendications précédentes, caractérisé en ce que le circuit détecteur d'un défaut comprend un transformateur ayant deux enroulements primaires différentiels (E1, E2), montés respectivement dans les lignes de phase (PH) et neutre (N) de l'installation, et un enroulement secondaire (E3) monté dans le circuit d'une entrée d'un amplificateur différentiel (A), dont l'autre entrée est reliée à un potentiel de référence, la sortie de cet amplificateur produisant la tension entraînant l'ouverture de l'organe interrupteur (F), par l'intermédiaire du circuit de commande en ouverture précité.

6. Dispositif interrupteur selon la revendication 5, caractérisé en ce que le circuit de commande comprend un amplificateur différentiel (B) dont une première entrée est reliée à la sortie de l'amplificateur détecteur d'un défaut (A) et dont la seconde entrée est reliée à un potentiel de référence variable entre une première valeur représentative de l'absence d'un défaut et une seconde valeur représentative d'un défaut occasionnant le verrouillage du circuit de commande à l'état d'ouverture de l'organe interrupteur (F) quel que soit l'état de l'amplificateur détecteur (A), la sortie de l'amplificateur de commande (B) constituant le potentiel d'activation d'un organe générateur du signal de commande de l'organe interrupteur, tel un opto-coupleur (H).

7. Dispositif interrupteur selon la revendication 6, caractérisé en ce que le potentiel de référence est établit par un diviseur de tension (R10, R11, R13) dont le rapport est variable par une diode (D5) montée entre le diviseur et la sortie de l'amplificateur d'activation (B).

8. Dispositif interrupteur selon l'une des revendications 6 ou 7, caractérisé en ce que le circuit à retard précité comprend un amplificateur différentiel (G) à excitation retardée par un montage du type RC (R3, C2), dont la sortie court-circuite l'organe générateur (H) du signal de commande tant qu'il n'est pas excité.

9. Dispositif interrupteur selon l'une des revendications 6 à 8, caractérisé en ce que le circuit de sortie de l'amplificateur d'activation (B) comprend des organes de visualisation de l'état du dispositif interrupteur, tel que des diodes LED rouge et verte (D3, D4), en fonction du potentiel à la sortie de cet amplificateur.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3668470 (THE STANLEY WORKS)<br>* le document en entier * | 1,3,4 | H02H3/33 |
| Y | | 2,8 | |
| Y | WO-A-8707428 (TELEMECANIQUE)<br>* page 6, alinéa 4 - page 7, alinéa 3 * | 2,8 | |
| X | FR-A-2520165 (CLAUDE SA.)<br>* page 8, lignes 3 - 16 * | 1,3-7 | |
| X | US-A-4031431 (THE GILLETTE COMPANY)<br>* colonne 7, lignes 41 - 47 *<br>* colonne 9, lignes 27 - 33 * | 1-4 | |

|  | DOMAINES TECHNIQUES RECHERCHES (Int. Cl.4) |
|---|---|
|  | H02H |

Le présent rapport a été établi pour toutes les revendications

| Lieu de la recherche | Date d'achèvement de la recherche | Examinateur |
|---|---|---|
| LA HAYE | 14 JUILLET 1989 | LIBBERECHT L.A. |